# EUROPÄISCHE PATENTSCHRIFT

(11) **EP 1 178 900 B1**
(45) Veröffentlichungstag und Bekanntmachung des Hinweises auf die Patenterteilung: **18.02.2004**
(21) Anmeldenummer: 00935021.6
(22) Anmeldetag: 15.05.2000
(51) Int. Cl.: B60N 2/42, B60N 2/00, B60N 2/68

(54) **SICHERHEITSSITZ**
SAFETY SEAT
SIEGE DE SECURITE

(30) Priorität: 18.05.1999 DE 19922781
(43) Veröffentlichungstag der Anmeldung: 13.02.2002
(73) Patentinhaber: Team Rosberg GmbH, 67433 Neustadt/Weinstrasse (DE)
(72) Erfinder: DÖHRER, Eckhardt, D-67435 Neustadt/Weinstrasse (DE)
(74) Vertreter: Grünecker, Kinkeldey, Stockmair & Schwanhäusser Anwaltssozietät
(86) Internationale Anmeldenummer: PCT/EP2000/004356
(87) Internationale Veröffentlichungsnummer: WO 2000/069673

(56) Entgegenhaltungen:
- EP-A- 0 670 237
- DE-A- 4 337 019
- DE-A- 19 539 620
- FR-A- 2 608 121
- US-A- 3 357 717
- US-A- 3 589 466
- US-A- 3 774 711
- US-A- 4 392 546

## Beschreibung

Die Erfindung betrifft einen Sicherheitssitz, insbesondere für ein Kraftfahrzeug mit den Merkmalen des Oberbegriffes des Patentanspruches 1. Besonders berücksichtigt sind hierbei die Gestaltung der Sitzform, die Befestigung des Sitzes an der Karosseriestruktur des Fahrzeuges und die Ausrüstung des Sicherheitssitzes.

Bei der Personenbeförderung mit Kraftfahrzeugen, insbesondere beim Einsatz von Kraftfahrzeugen für Motorsportveranstaltungen, ergeben sich zunehmend erhöhte Verletzungsrisiken für die Insassen des Fahrzeuges aufgrund der hohen gefahrenen Geschwindigkeiten sowie der damit zusammenhängenden Risiken von Unfällen oder Kollisionen.

Insbesondere beim Motorsportrennen, wie beispielsweise bei Touringwagenrennen, die mit straßentauglichen Fahrzeugen durchgeführt werden, und somit nicht ausschließlich für den Rennsport konzipiert wurden, besteht die Gefahr, daß bei einem Unfall oder einer Kollision der Rennfahrer oder sein Beifahrer schwere Verletzungen erleiden.

Dies ist insbesondere dann der Fall, wenn das Fahrzeug von einem anderen Fahrzeug seitlich gerammt wird und der Fahrgastinnenraum dadurch deformiert wird. Auch im Fall eines Überschlages, oder wenn das Fahrzeug in Brand gerät sind die Fahrzeuginsassen aufs äußerste gefährdet.

Auch bei einem Seitenaufprall ist, da üblicherweise nur wenig Karosseriestruktur zur Energieabsorption zur Verfügung steht, der Insasse durch Eindringen seitlicher Karosserieteile in den Fahrgastraum stark gefährdet.

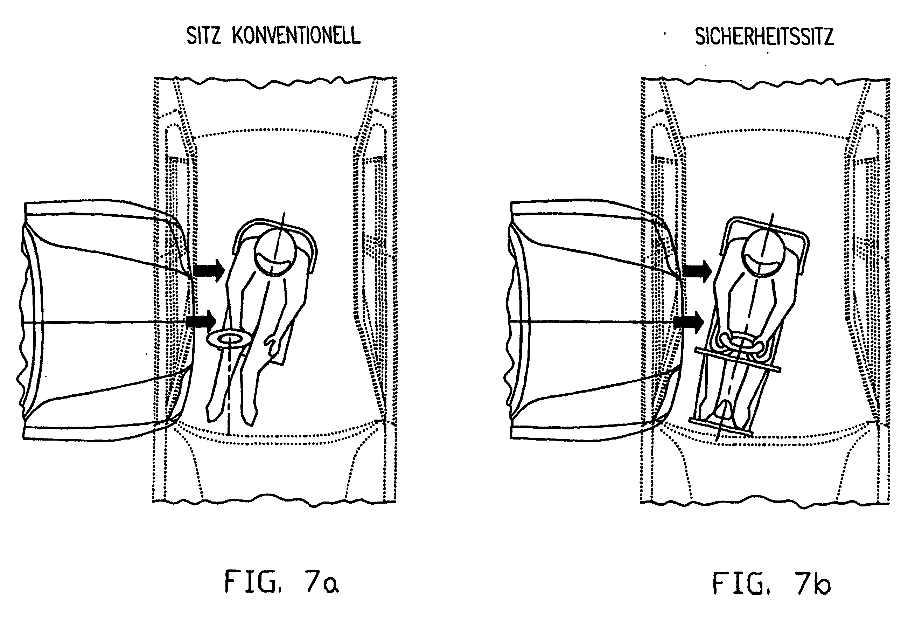

Hierbei besteht bei bekannten Sitzsystemen auch die Gefahr, daß sich der Sitz mit dem Oberkörper des Insassen in Richtung Fahrzeugmitte verlagert, die Beine jedoch aufgrund der Karosseriestruktur in ihrer ursprünglichen Position bleiben und so ein Abknicken des Fahrzeuginsassen im Bereich des Beckens und der Wirbelsäule erfolgt, wie in Fig. 7a dargestellt.

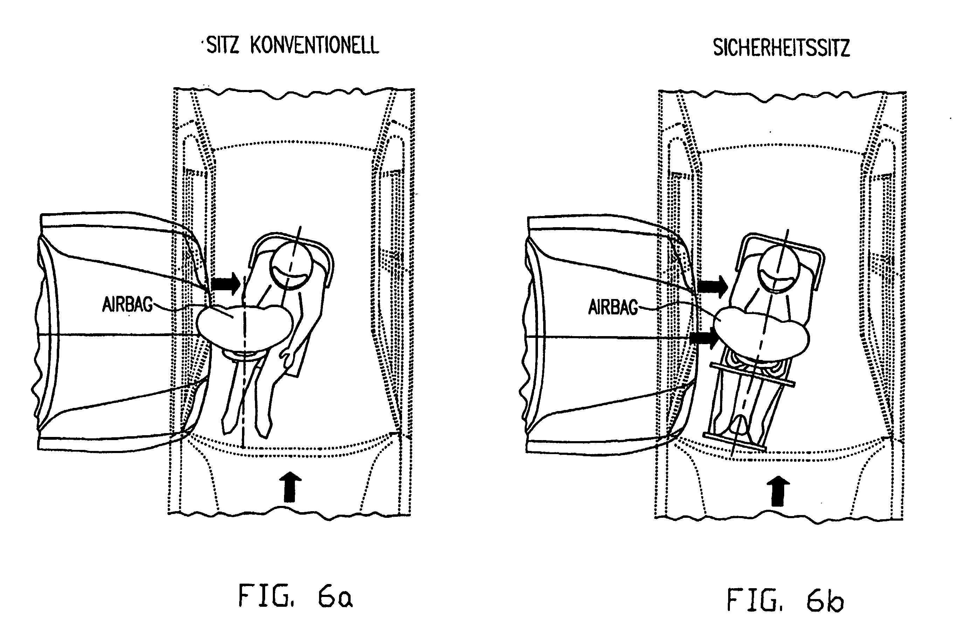

Daneben führt ein kombinierter Seiten- und Frontalaufprall mit Auslösung des Airbags bei bekannten Sitzsystemen insbesondere durch die seitliche Verlagerung der Sitzposition zu einer Verschiebung der Position des Oberkörpers des Insassen relativ zur Position des Lenkrades, so daß die Wirkung des Airbags stark eingeschränkt oder verhindert wird. Dies geschieht vorzugsweise dann, wenn zunächst Seitenaufprall und anschließend Frontalaufprall stattfindet, wie in Fig. 6a und 7a gezeigt.

Auch bei einem Überschlag und einer folgenden Verformung der Dachstruktur wird der Überlebensraum für den Insassen minimiert.

Aus der DE 43 37 019 ist ein Kraftfahrzeug-Sicherheitssitz bekannt, der als an einer Fahrzeugkarosserie verankerter und in seiner Verankerung bewegbarer Schalensitz ausgebildet ist. Der Schalensitz weist einen Fußbereich, einen Sitzbereich und einen Rückenlehnenbereich auf, wobei der Sicherheitssitz bei externen, auf das Kraftfahrzeug wirkenden Kräften als Ganzes relativ zur Fahrgastzelle verlagerbar ist.

Der Erfindung liegt die Aufgabe zugrunde, einen Sicherheitssitz der eingangs genannten Art zu schaffen, der den Insassen eines Fahrzeugs einen optimalen Schutz gegenüber den Folgen eines Unfalls bietet.

Diese Aufgabe wird erfindungsgemäß durch einen Sicherheitssitz mit den Merkmalen des Patentanspruches 1 gelöst.

Durch die vorgehend beschriebene Ausgestaltung des erfindungsgemäßen Sicherheitssitzes ist die passive Sicherheit eines Insassen in einem Fahrzeug stark erhöht, insbesondere werden auch Verletzungsfolgen aufgrund unterschiedlicher Unfallarten wie Frontaufprall, Seitenaufprall, Überschlag und im Brandfall möglichst gering gehalten oder vollständig verhütet.

Da der Sicherheitssitz so gestaltet ist, daß der Fußraum von einer hochfesten kastenförmigen Struktur umgeben ist, welche eine Einheit mit der eigentlichen Sitzschale bildet, wird bei einem Frontalcrash gewährleistet, daß die Beine des Insassen vor Verletzungen geschützt sind und ein Eindringen von Fahrzeugteilen in den Fußraum ausgeschlossen ist.

Indem auch eine Pedalanlage mit der Sitzstruktur fest verbunden ist, und somit eine Verlagerung der Pedale retativ zum Insassen ausgeschlossen ist, wird auch das Risiko der typischen Verletzungen infolge des Eindringens der Pedale in den Fußraum verringert.

Auch bei einem Seitenaufprall wird die passive Sicherheit durch einen erfindungsgemäßen Sicherheitssitz erhöht, da zwar üblicherweise nur wenig Karosseriestruktur zur Energieabsorption bei einem Seitenaufprall zur Verfügung steht, aber der Insasse durch die ihm umgebende hochfeste Struktur, insbesondere der Seitenschale des Sicherheitssitzes, welche das Eindringen seitlicher Karosserieteile in den Übenebensraum des Insassen verhindert, weiter geschützt ist.

Ebenso werden Scherwirkungen zwischen den unteren Extremitäten und dem Oberkörper des Insassen durch den Sicherheitssitz vermieden, indem der Fußraum kastenförmig verstärkt ist sowie die eigentliche Sitzschale mit dem Fußraum eine integrierte geschlossene und hochfeste Struktur bildet, welche sich im Fall eines Seitenaufpralls nur als gesamte Einheit innerhalb der Fahrzeugstruktur verlagern kann.

Durch integrieren einer Lenksäulenhalterung in die Struktur des Sicherheitssitzes bleibt auch bei einem kombinierten Front-Seitenaufprall die geometrische Zuordnung zwischen dem Kopf des Insassen und Airbagposition in jedem Fall erhalten.

Darüber hinaus überragt die Rückenlehne des erfindungsgemäßen Sicherheitssitzes den Kopf des Insassen nach oben, so daß durch ihre Strukturfestigkeit ein ausreichender Überlebensraum für den Insassen bei der Verformung der Dachstruktur infolge eines Überschlags garantiert ist.

Zum Schutz vor extremen seitlichen Kopfbewegungen des Insassen und um ein Anschlagen des Kopfes an Karosserieteilen zu verhindern, ein zusätzlicher seitlicher Kopfschutz in die Sitzstruktur integriert, der, ebenso wie der Bereich der Wirbelsäule am Sitzelement, mit einem stoßabsorbierenden Schaum gepolstert ist.

Der erfindungsgemäße Sicherheitssitz eignet sich insbesondere für Land-, Wasserund Luftfahrzeuge, also allgemein für Personenbeförderungsmittel. Ganz besonders ist der erfindungsgemäße Sicherheitssitz unter anderem in Rennbooten, Fluggeräten, welche durch extremen Leichtbau nur sehr geringen strukturellen Insassenschutz bieten, einsetzbar.

Bevorzugte Weiterbildungen des erfindungsgemäßen Sicherheitssitzes sind in den Unteransprüchen dargelegt.

Die vorliegende Erfindung wird nachfolgend anhand von bevorzugten Ausführungsbeispielen in Verbindung mit den zugehörigen Zeichnungen näher erläutert. In diesen zeigen:
- Fig. 1: eine Ansicht eines Ausführungsbeispieles des vorliegenden Sicherheitssitzes von schräg vorne,
- Fig. 2: eine Ansicht des Ausführungsbeispieles von schräg hinten,
- Fig. 3: eine auseinandergezogene Ansicht einzelner Elemente des Ausführungsbeispieles des Fahrzeugsitzes,
- Fig. 4: eine schematische Ansicht des Ausführungsbeispieles des Sicherheitssitzes, integriert in ein Kraftfahrzeug,
- Fig. 5: eine Ansicht des strukturellen Aufbaus des Ausführungsbeispiels des Sicherheitssitzes,
- Fig. 6a,6b: ein Fahrzeug mit einem herkömmlichen Sitz und ein Fahrzeug mit dem Ausführungsbeispiel des Sicherheitssitzes, jeweils im Zeitpunkt eines Frontalaufpralles, und
- Fig. 7a,7b: ein Fahrzeug mit einem herkömmlichen Sitz und ein Fahrzeug mit dem Ausführungsbeispiel des Sicherheitssitzes, jeweils zum Zeitpunkt eines kombinierten Seiten- und Frontaufpralles.

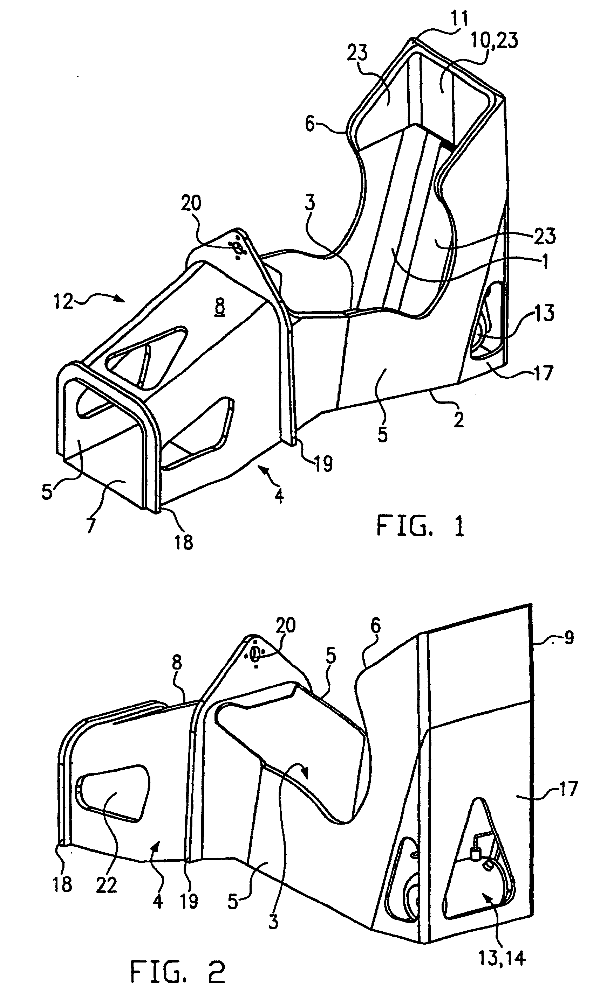

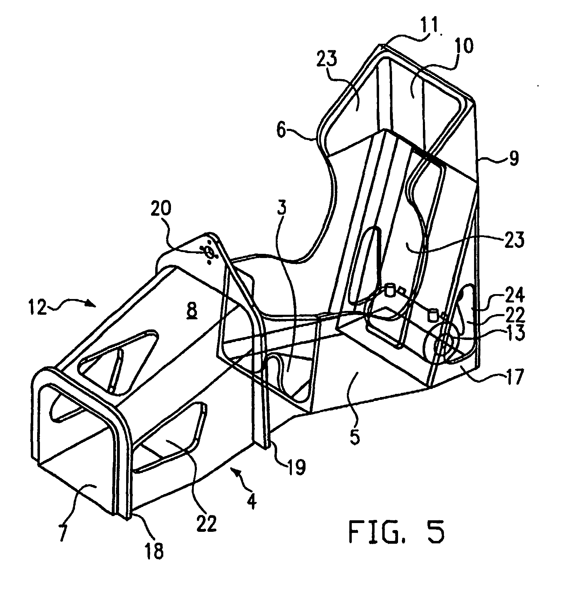

Wie in den Figuren 1 bis 5 dargestellt umfaßt der vorliegende Sicherheitssitz ein Schalenelement 2, In dem ein Sitzbereich 3, ein Rückenlehnenbereich 1 und ein Fußbereich 4 integriert ausgebildet sind.

Der Sicherheitssitz ist hierbei so ausgestaltet daß er in seinem Fußbereich 4 eine annähernd kastenförmige Struktur aufweist, die aus den Seitenwänden 5 des Schalenelementes 2, einer durchgehend an der Unterseite des gesamten Fahrzeugsitzes ausgebildeten Bodenwand 7 und einer die beiden Seitenwände 5 im Fußbereich 4 verbindenden Deckenwandung 8 gebildet wird. Der Fußbereich 4 weist vorzugsweise eine konische Grundstruktur auf, die von vorne nach hinten an Höhe und Breite zunimmt. Der Übergangsbereich zwischen den Seitenwänden 5 und der Deckenwandung 8 kann abgerundete Kanten aufweisen, jedoch auch winkelig ausgebildet sein.

Sowohl die Seitenwände 5 wie auch die Deckenwandung 8 weisen im Fußbereich eine Anzahl von Öffnungen (vorzugsweise jeweils eine) auf, die hauptsächlich der Belüftung und der Zugänglichkeit von außen des Fußbereiches 4 dienen. Nach vorne und nach hinten ist der Fußbereich vorzugsweise jeweils offen ausgestaltet, so daß ebenfalls eine Zirkulation gefördert wird.

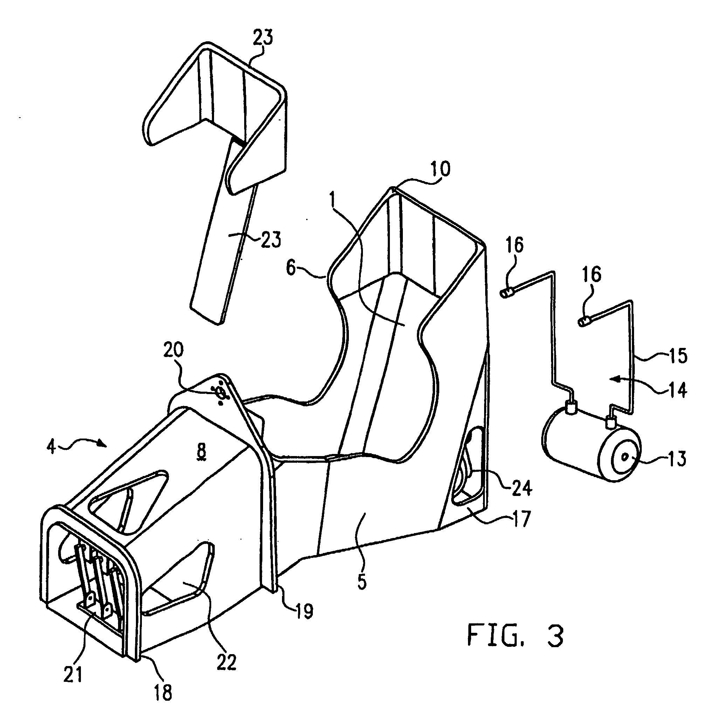

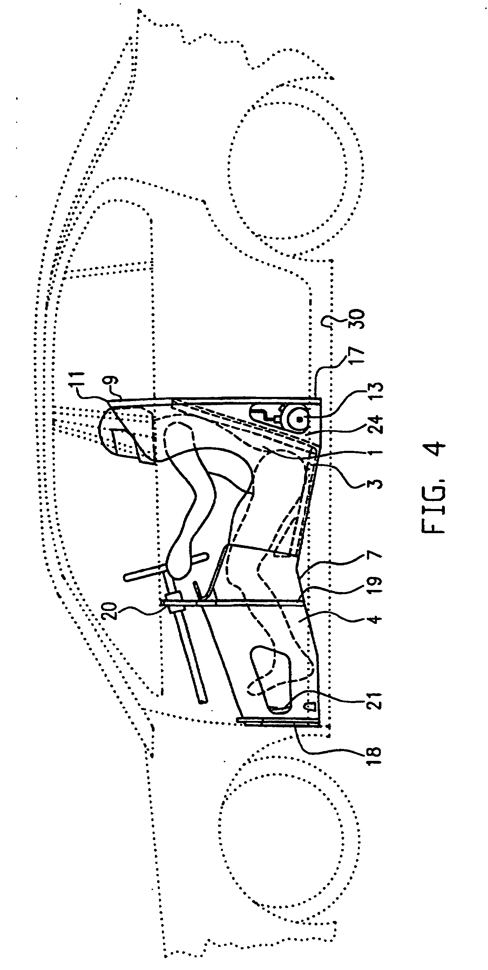

Am vorderen Ende des Fußbereiches 4 ist eine Pedalanlage 21, wie in den Fig. 3 und 4 dargestellt, fest mit dem Sicherheitssitz, vorzugsweise mit der Bodenwand 7 verbunden. Durch die Pedalanlage 21 ist das Fahrverhalten des Fahrzeugs steuerbar. Die Pedalanlage umfaßt hierbei vorzugsweise ein Gaspedal, ein Bremspedal und ein Kupplungspedal. Jedoch können für weitere Bedienfunktionen auch zusätzliche Pedale oder Bedienhebel im Fußbereich des Sicherheitssitzes angeordnet sein.

Durch die feste Verbindung der Pedalanlage mit dem Sicherheitssitz wird sichergestellt, daß bei einem Unfall, insbesondere bei einem Frontalcrash, die Pedale nicht unkontrolliert in den Fußraum des Fahrers hineingedrückt werden können.

Zumindest an seinem unteren Ende und an seinem oberen Ende weist der Fußbereich 4 des Sicherheitssitzes jeweils ein Rahmenverstärkungselement 18, 19 auf, das der Versteifung des Schalenelementes 2 dient.

Ein unteres Rahmenverstärkungselement 18 ist hierbei im vorderen Fußbereich, vorzugsweise U-förmig oberhalb der Pedalanlage 21, ausgebildet, so daß es sich von der Bodenwand 7 entlang der Außenseite einer der Seitenwände 5 und entlang der Deckenwandung 8, entlang der zweiten Seitenwand 5 wieder zur Bodenwand 7 erstreckt.

Entsprechend ist ein oberes Rahmenverstärkungsetement 19 am hinteren Ende des Fußbereichs ausgebildet, vorzugsweise mit dem rückwärtigen Ende der Deckenwandung 8 des Fußbereiches 4 abschließend an einer Stelle des Schalenelementes 2, in dem der Fußbereich in den Sitzbereich des Sicherheitssitzes übergeht.

Das obere Rahmenverstärkungsetement 19 unterscheidet sich insofern vom unteren Rahmenverstärkungselement 18, als es in seinem oberhalb der Deckenwandung 8 angeordneten Abschnitt, vorzugsweise in oder in der Nähe einer mittleren vertikalen Symmetrieebene der Sitzlängsrichtung, eine Lenksäulenhalterung 20 aufweist. Diese Lenksäulenhalterung 20 ist vorzugsweise als Durchgangsloch in der Längsrichtung des Sicherheitssitzes ausgebildet, um eine Lenksäule verschiebungsfrei am Sicherheitssitz zu haltern.

Dadurch wird gewährleistet, daß insbesondere bei einem Frontalcrash oder auch bei einem Seitencrash die Position eines Lenkrades und somit eines sich darin befindlichen Airbags relativ zum Kopf des in dem Sicherheitssitz aufgenommenen Fahrers oder Beifahrers beibehalten wird, und Lenksäule und Airbag crashbedingt mit dem Fahrer und dem Sicherheitssitz mitbewegt werden, wie in Fig. 6b und 7b dargestellt

Im Kopfbereich des Sicherheitssitzes sind die Seitenwände 5 des Schalenelementes 2 nach oben und nach vorne vorgezogen ausgestaltet, so daß sie Kopfseitenstützen 6 bilden, die verhindern, daß bei einem Fahrzeugseitencrash der Kopf des Fahrzeuginsassen unkontrolliert weit zur Seite geschleudert werden kann, wodurch Verletzungen im Halswirbelbereich vermieden werden können.

Dabei sind die Kopfseitenstützen 6 der Seitenwände 5 soweit nach oben verlängert ausgebildet daß sie zusammen mit einer integral durch eine hochgezogene Rückwand 9 des Sicherheitssitzes ausgebildete Kopfrückenstütze 10 einen Überrollschutz 11 bilden.

Sollte im Zug eines Fahrzeugunfalls das Fahrzeug sich überschlagen und dadurch das Dach eingedrückt werden, so daß eine Verletzung des Insassen aufgrund eines reduzierten Kopffreiraumes in der Fahrgastkabine zu befürchten wäre, gewährleistet der Überrollschutz immer genügend Kopffreiheit für den im Sicherheitssitz angeschnallten Insassen, indem der Überrollschutz 11 einem übermäßigen Eindrücken des Fahrzeugdaches durch Abstützung des Fahrzeugsitzes gegenüber dem Boden des Fahrzeuginnenraumes entgegenwirkt.

Vorzugsweise ist der rückwärtige Bereich der Rückenlehne des Sicherheitssitzes als Hohlkörper ausgebildet. Hierdurch wird die Steifigkeit des Sicherheitssitzes ebenso erhöht wie zusätzlicher Stauraum geschaffen.

Damit der Fahrzeuginsasse bei einem solchen Unfall oder Überschlag nicht aus dem Sitz geschleudert werden kann, sind Sicherheitsgurte, ähnlich der Gurte in einem herkömmlichen Sportwagen, rechts und links am Sitzelement 3 oder dem Schalenelement 2 befestigt

Im Bereich des Sitzelementes 3 und / oder des Rückenlehnenbereiches 1, die integral in dem Schalenelement 2 des Sicherheitssitzes ausgebildet sind, ist zumindest entlang des mittleren Bereiches des Rückenlehnenbereiches 3 ein stoßabsorbierendes Element 23, beispielsweise eine Schaumpolsterbahn, zum Rückenschutz der aufzunehmenden Person vorgesehen.

Ebenso sind die Kopfrückenstütze 10 und die Kopfseitenstützen 6 zumindest auf ihren Innenseiten mit stoßabsorbierenden Elementen 23 versehen, die eine Polsterung und eine Erhöhung des. Insassenschutzes bei einem Fahrzeugcrash bewirken.

An der Außenseite des rückwärtigen Bereichs des Schalenelementes 2 ist darüber hinaus ein Stauraum 24 ausgebildet, der durch ein abnehmbar ausgestaltetes Rückenteil 17 nach außen, durch die Rückseite des in dem Schalenelement 2 ausgebildeten Rückenlehnenbereiches 1 nach vorne und durch die Seitenwände 5 des Schalenelementes 2 seitlich begrenzt ist.

Der Stauraum dient der Versteifung der gesamten Sitzstruktur ebenso wie der Aufnahme eines Löschmitteltanks 13 und Versteifung der gesamten Sitzstruktur als Teil einer in den Sicherheitssitz integrierten Feuerlöschanlage 14. Hierdurch ist ein fahrernahes Rettungssystem geschaffen, das auch dann wirksam ist, wenn das Fahrzeug schwer beschädigt und karosseriebezogene, vergleichbare Rettungssysteme beschädigungsbedingt nicht mehr funktionieren. Die Feuerlöschanlage 14 umfaßt ferner ein Leitungssystem 15, das vorzugsweise ebenfalls in das Schalenelement 2 integriert ist, und über Austrittsdüsen 16, die im Kopfbereich und Körperbereich des Insassen angeordnet sind, Löschflüssigkeit abgeben kann. Daneben ist eine Branderkennungsanlage integriert Die Brandbekämpfung erfolgt somit gezielt an dem Ort, an dem sich der jeweilige Insasse des Fahrzeuges befindet und durch die vorzugsweise Anordnung der Austrittsdüsen direkt über dem Kopf des Insassen ist insbesondere dieser vor schweren Brandverletzungen geschützt.

Durch diese Anordnung der Austrittsdüsen entlang der Sitzstruktur wird eine optimale Verteilung des Löschmittels in der gesamten direkten Umgebung des Insassen erreicht. Durch die crashsichere Anordnung der Löschanlage innerhalb des Sitzstruktur ist eine erhöhte Ausfallsicherheit der Anlage infolge Unfall gegeben, da durch eine Verlagerung des Sitzes relativ zur Fahrzeugstruktur keine Zufuhrleitungen oder Steuerungskabel abgerissen werden können.

Der gesamte Sicherheitssitz ist in einer Monocoque-Bauweise unter Verwendung von Faserverbundwerkstoffen und Bildung einer Honeycombstruktur oder Verwendung anderer geeigneter Werkstoffe ausgeführt. Er ist aufgrund dieser Bauweise auch extrem leicht, so daß er trotz seiner Hochfestigkeit problemlos in den Innenraum eines Fahrzeuges integrierbar und montierbar ist und zu Wartungsarbeiten oder dergleichen leicht aus dem Fahrzeug herausgehoben werden kann.

Der Sitz ist mit geeigneten Befestigungselementen, wie z.B. Verschraubung oder Verklebung starr mit der Karosseriestruktur verbunden und verstärkt somit deren Gesamtsteiffigkeit. Hierbei ist die Befestigung jedoch lastabhängig ausgebildet. Bei einer Überbeanspruchung oder einer extrem starken Belastung, beispielsweise durch Frontoder Seitenimpakt löst sich der Sicherheitssitz als ganzes von dem Boden der Fahrgastzelle bzw. der Fahrzeugkarosserie ab und verlagert sich von dem lmpakt weg, so daß der Insassenfreiraum gewahrt bleibt.

Selbstverständlich ist der Einsatz des vorliegenden Sicherheitssitzes nicht auf Automobile beschränkt. Denkbar ist beispielsweise die Verwendung in Luft- und Wasserfahrzeugen. Auch ist die Ausführung nicht auf die Integration nur eines Stauraumes beschränkt So sind weitere Aufnahmeräume für Kommunikations- oder Steuerelektronik beispielsweise im Fuß- oder Seitenbereich denkbar. Ebenso können weitere Versteifungsstrukturen oder -träger in das Schalenelement integriert oder mit diesem verbunden werden.

Durch Lösen entsprechend ausgebildeter Befestigungselemente kann das Unfallopfer nach dem üblichen Abtrennen der Dachstruktur mit dem kompletten Sitz geborgen werden. Damit können u.a. Wirbeisäulenverletzungen als Folge der Bergung verhindert werden.

## Patentansprüche

1. Sicherheitssitz, insbesondere für ein Kraftfahrzeug, mit einem Schalenelement (2), das an einer Fahrzeugkarosserie (30) befestigt ist, und der einstückig einen Fußbereich (4), einen Sitzbereich (3) und einem Rückenlehnenbereich (1) aufweist, **dadurch gekennzeichnet, daß** das Schalenelement (2) Seitenwände (5) aufweist, die im Fußbereich (4) zu einer kastenförmigen Struktur (12) verbunden sind.

2. Sicherheitssitz nach Anspruch 1, **dadurch gekennzeichnet, daß** das Schalenelement (2) an seiner Unterseite durch eine Bodenwand (7) völlig geschlossen ist und zumindest in einem Fußbereich (4) die kastenförmige Struktur (12) aufweist.

3. Sicherheitssitz nach Anspruch 1 oder 2, **dadurch gekennzeichnet, daß** der Sicherheitssitz bei einwirkenden Belastungen als Ganzes relativ zur Fahrzeugkarosserie verlagerbar ist.

4. Sicherheitssitz nach einem der Ansprüche 1 bis 3, **dadurch gekennzeichnet, daß** das Schalenelement (2) Seitenwände (5) umfaßt, die im Kopfbereich der Person als Kopfseitenstützen (6) ausgebildet sind, und im Fußbereich (4) durch eine Bodenwand (7) und eine Deckenwandung (8) miteinander verbunden sind.

5. Sicherheitssitz nach einem der Ansprüche 1 bis 4, **dadurch gekennzeichnet, daß** das Schalenelement (2) eine Rückwand (9) umfaßt, die im Rückenlehnenbereich (1) über den Kopfbereich der aufzunehmenden Person nach oben verlängert ausgebildet ist, als Kopfrückstütze (10) und Überrollschutz (11).

6. Sicherheitssitz nach Anspruch 4 oder 5, **dadurch gekennzeichnet, daß** die Kopfrückstütze (10) und die Kopfseitenstützen (6) zumindest auf ihren Innenseiten mit einem stoßabsorbierenden Element (23) versehen sind.

7. Sicherheitssitz nach einem der Ansprüche 1 bis 6, **dadurch gekennzeichnet, daß** zumindest entlang eines mittleren Bereichs des Rücklehnenbereiches (1) ein weiteres stoßabsorbierendes Element (23) zum Rückenschutz der aufzunehmenden Person vorgesehen ist.

8. Sicherheitssitz nach einem der Ansprüche 1 bis 7, **dadurch gekennzeichnet, daß** hinter der Rückwand (9) ein Stauraum (24) ausgebildet ist, der durch ein abnehmbar ausgestattetes Rückenteil (17) nach außen begrenzt ist, und in dem zumindest ein Löschmitteltank (13) einer in den Sicherheitssitz integrierten Feuerlöschanlage (14) angeordnet ist.

9. Sicherheitssitz nach Anspruch 8, **dadurch gekennzeichnet, daß** im Schalenelement (2) ein Leitungssystem (15) integriert ist, über das in einem Brandfall Löschmittel aus dem Löschmitteltank (13) durch Austrittsdüsen (16) auf die aufzunehmende Person abgegeben wird.

10. Sicherheitssitz nach einem der Ansprüche 1 bis 9, **dadurch gekennzeichnet, daß** das Schalenelement (2) zumindest im Fußbereich (4) durch Rahmenverstärkungselemente (18, 19), die vorzugsweise U-förmig ausgebildet sind, verstärkt ist

11. Sicherheitssitz nach Anspruch 10, **dadurch gekennzeichnet, daß** sich Rahmenverstärkungselemente (18, 19) von der Bodenwand (7) entlang der ersten Seitenwand (5) über die Deckenwandung (8) und entlang der zweiten Seitenwand (5) wieder zur Bodenwand (7) hin erstrecken.

12. Sicherheitssitz nach einem der Ansprüche 1 bis 11, **dadurch gekennzeichnet, daß** eine Lenksäutenhalterung (20) fest mit dem Sicherheitssitz verbunden, insbesondere an einer Oberseite der kastenförmigen Struktur (12) des Schalenelementes (2) vorgesehen ist.

13. Sicherheitssitz nach Anspruch 12, **dadurch gekennzeichnet, daß** die Lenksäulenhalterung (20) zumindest in einem oberen Rahmenverstärkungselement (19) ausgebildet ist.

14. Sicherheitssitz nach einem der Ansprüche 1 bis 13, **dadurch gekennzeichnet, daß** das Schalenelement (2) im Fußbereich (4) eine fest mit diesem verbundene Pedalanlage (21) zur Bedienung des Kraftfahrzeugs aufweist.

15. Sicherheitssitz nach einem der Ansprüche 1 bis 14, **dadurch gekennzeichnet, daß** das Schalenelement (2) im Fußbereich an einer Vorderseite der kastenförmigen Struktur (12) eine Öffnung (22) aufweist.

16. Sicherheitssitz nach einem der Ansprüche 1 bis 12, **dadurch gekennzeichnet, daß** das Schalenelement (2), der Fußbereich (4), der Sitzbereich (3) und der Rückenlehnenbereich (1) integral aus Faserverbundwerkstoffen (CFK) in Monocoquebauweise gefertigt sind.

17. Sicherheitssitz nach einem der Ansprüche 1 bis 16, **dadurch gekennzeichnet, daß** das Schalenelement (2), der Fußbereich (4), der Sitzbereich (3) und der Rückenlehnenbereich (1) eine Honeycombstruktur aufweisen.

## Claims

1. A safety seat, in particular for an automotive vehicle, comprising a shell element (2) which is secured to a vehicle body (30) and has integrally formed therein a foot area (4), a seat area (3) and a backrest area (1), **characterized in that** said shell element (2) comprises side walls (5) which are connected in said foot area (4) to form a box-shaped structure (12).

2. The safety seat according to claim 1, **characterized in that** said shell element (2) is entirely closed on its bottom side by a bottom wall (7) and has said box-shaped structure (12) at least in a foot area (4).

3. The safety seat according to claim 1 or 2, **characterized in that** said safety seat is displaceable as a whole relative to said vehicle body upon loads acting thereon.

4. The safety seat according to any one of claims 1 to 3, **characterized in that** said shell element (2) comprises side walls (5) which are designed in the head area of a person as lateral head rests (6) and are interconnected in said foot area (4) by a bottom wall (7) and a cover wall (8).

5. The safety seat according to any one of claims 1 to 3, **characterized in that** said shell element (2) comprises a rea wall (9) which is extended upwards in said backrest area (1) over the head portion of the person to be received and designed as a rear head rest (10) and a roll-over protection (11).

6. The safety seat according to claim 4 or 5, **characterized in that** said rear head rest (10) and said lateral head rests (6) are provided at least on their insides with a shock-absorbing element (23).

7. The safety seat according to any one of claims 1 to 6, **characterized in that** at least along a central portion of said backrest area (1), a further shock-absorbing element (23) is provided for protecting the back of the person to be received.

8. The safety seat according to any one of claims 1 to 7, **characterized in that** a stowage space (24) which is outwardly defined by a detachably designed rear part (17) and has arranged therein at least one fire-extinguishing agent tank (13) of a fire-extinguishing system (14) integrated into said safety seat is formed behind said rear wall (9).

9. The safety seat according to claim 8, **characterized in that** said shell element (2) has integrated thereinto a line system (15) via which in case of fire a fire-extinguishing agent is discharged from said fire-extinguishing agent tank (1) through discharge nozzles (16) onto the person to be received.

10. The safety seat according to any one of claims 1 to 9, **characterized in that** said shell element (2) is reinforced at least in said foot area (4) by frame-reinforcing elements (18, 19) which are preferably U-shaped.

11. The safety seat according to claim 10, **characterized in that** said frame-reinforcing elements (18, 19) extend from said bottom wall (7) along said first side wall (5) over said cover wall (8) and along said second side wall (5) back to said bottom wall (7).

12. The safety seat according to any one of claims 1 to 11, **characterized in that** a steering column bracket (20) is firmly connected to said safety seat, and is particularly provided on an upper side of said box-shaped structure (12) of said shell element (2).

13. The safety seat according to claim 12, **characterized in that** said steering column bracket (20) is at least designed in an upper frame reinforcing element (19).

14. The safety seat according to any one of claims 1 to 13, **characterized in that** said shell element (2) in said foot area (4) comprises a pedal system (21) firmly connected thereto for operating said automotive vehicle.

15. The safety seat according to any one of claims 1 to 14, **characterized in that** said shell element (2) in said foot area (4) comprises an opening (22) at a front side of said box-shaped structure (12).

16. The safety seat according to any one of claims 1 to 12, **characterized in that** said shell element (2), said foot area (4), said seat area (3) and said backrest area (1) are integrally made from fiber composites (CFRP) in a monocoque construction.

17. The safety seat according to any one of claims 1, to 16, **characterized in that** said shell element (2), said foot area (4), said seat area (3) and said backrest area (1) have a honeycomb structure.

## Revendications

1. Siège de sécurité, en particulier pour un véhicule automobile, avec une coque (2) fixée à une carrosserie de véhicule (30) et qui présente d'une seule pièce un espace pour les pieds (4), un espace pour le siège (3) et un espace pour le dossier (1), **caractérisé en ce que** la coque (2) présente des parois latérales (5), qui sont reliées dans l'espace pour les pieds (4) à une structure en forme de caisson (12).

2. Siège de' sécurité selon la revendication 1, **caractérisé en ce que** la coque (2) est totalement fermée sur sa face inférieure par une paroi de sol (7) et présente au moins dans un espace pour les pieds (4) la structure en forme de caisson (12).

3. Siège de sécurité selon la revendication 1 ou 2, **caractérisé en ce que** le siège de sécurité peut être décalé en cas de contraintes effectives comme un tout par rapport à la carrosserie du véhicule.

4. Siège de sécurité selon l'une, des revendications 1 à 3, **caractérisé en ce que** la coque (2) comprend des parois latérales (5), conçues dans l'espace pour la tête de la personne comme appuis-tête latéraux (6) et reliées l'une avec l'autre dans l'espace pour les pieds (4) par une paroi de sol (7) et une paroi de recouvrement (8).

5. Siège de sécurité selon l'une des revendications 1 à 4, **caractérisé en ce que** la coque (2) comprend une paroi arrière (9), conçue dans l'espace de dossier (1) de façon prolongée vers le haut par-dessus l'espace pour la tête de la personne à accueillir, comme appuie-tête arrière (10) et protection contre les tonneaux (11).

6. Siège de sécurité selon la revendication 4 ou 5, **caractérisé en ce que** l'appui-tête arrière (10) et les appuis-tête latéraux (5) sont équipés au moins sur leur face intérieure d'un élément absorbant les chocs (23).

7. Siège de sécurité selon l'une des revendications 1 à 6, **caractérisé en ce que**, au moins le long d'une zone médiane de l'espace de dossier (1), un autre élément absorbant les chocs (23) est prévu pour assurer une protection arrière de la personne à accueillir.

8. Siège de sécurité selon l'une des revendications 1 à 7, **caractérisé en ce que**, derrière la paroi arrière (9), est conçu un espace libre (24), qui est limité vers l'extérieur par une pièce arrière amovible (17), et dans lequel est disposé au moins un réservoir contenant un agent d'extinction (13) d'un dispositif d'extinction d'incendie (14) intégré dans le siège de sécurité.

9. Siège de sécurité selon la revendication 8, **caractérisé en ce que** dans la coque (2) est intégré un système de conduite (15) par lequel un agent d'extinction est acheminé, en cas d'incendie, du réservoir (13) par les buses de sortie (16) pour être diffusé sur la personne à accueillir.

10. Siège de sécurité selon l'une des revendications 1 à 9, **caractérisé en ce que** la coque (2) est renforcée au moins dans l'espace pour les pieds (4) par des éléments de renfort de cadre (18, 19), conçus de préférence en forme de U.

11. Siège de sécurité selon la revendication 10, **caractérisé en ce que** les éléments de renfort de cadre (18, 19) s'étendent de la paroi de sol (7) le long de la première paroi latérale (5) par la paroi de recouvrement (8), et le long de la seconde paroi latérale (5) de nouveau vers la paroi de sol (7).

12. Siège de sécurité selon l'une des revendications 1 à 11, **caractérisé en ce qu'**un support de colonne de direction (20) est relié fixement avec le siège de sécurité, en particulier à une face supérieure de la structure en forme de caisson (12) de la coque (2).

13. Siège de sécurité selon la revendication 12, **caractérisé en ce que** le support de colonne de direction (20) est conçu au moins dans un élément de renfort de cadre (19) supérieur.

14. Siège de sécurité selon l'une des revendications 1 à 13, **caractérisé en ce que** la coque (2) présente dans l'espace pour les pieds (4) un système de pédales (21) relié à celui-ci de façon fixe pour la commande du véhicule.

15. Siège de sécurité selon l'une des revendications 1 à 14, **caractérisé en ce que** la coque (2) présente dans pour les pieds un orifice (22) sur une face avant de la structure en forme de caisson (12).

16. Siège de sécurité selon une des revendications 1 à 12, **caractérisé en ce que** la coque (2), l'espace pour les pieds (4), l'espace pour le siège (3) et l'espace pour le dossier (1) sont fabriqués intégralement en matériau renforcé par des fibres (CFK) selon une construction monocoque.

17. Siège de sécurité selon l'une des revendications 1 à 16, **caractérisé en ce que** la coque (2), l'espace pour les pieds (4), l'espace pour le siège (3), et l'espace pour le dossier (1) présentent une structure en nid d'abeille.
